# EUROPEAN PATENT APPLICATION

(11) **EP 4 628 973 A1**
(43) Date of publication of application: **08.10.2025**
(21) Application number: 25166845.5
(22) Date of filing: 27.03.2025
(51) Int. Cl.: G02B 30/56

(54) **DISPLAY DEVICE**

(30) Priority: 05.04.2024 JP 2024061676
(71) Applicant: Alps Alpine Co., Ltd., Ota-ku, Tokyo 145-8501 (JP)
(72) Inventor: Yuza, Shingo, Iwaki-city Fukushima (JP); Ikarashi, Yasuhiro, Osaki-shi Miyagi (JP)
(74) Representative: Schmitt-Nilson Schraud Waibel Wohlfrom Patentanwälte Partnerschaft mbB

(57) **Abstract**

A display device configured for displaying an aerial image by using retro-reflection is provided. The display device includes: a light source disposed being inclined to one side of a reference line; a retroreflective member disposed being inclined to another side of the reference line; a polarized-beam splitter disposed to face the light source and the retroreflective member; and a transmission film formed on the polarized-beam splitter. The transmission film includes a low transmittance area in which the light source is difficult to be seen in an observation range where the aerial image is visible.

## Description

The present disclosure relates to a display device provided with a function of displaying a video image in the air by using retro-reflection.

Aerial imaging by retro-reflection (AIRR) is known. For example, an aerial image display device disclosed in JP2022-150245A has a configuration in which a light source and a retroreflective member are positioned such that the light reflected by the retroreflective member does not enter an observation range. The aerial image display device of JP2022-180814A discloses a configuration in which an original video image of a display light source does not enter and disturb an aerial image by changing an inclination angle of the display light source and the inclination angle of the beam splitter.

The present disclosure relates to a display device according to the appended claims. Embodiments are disclosed in the dependent claims.

A display device according to an aspect of the present disclosure is configured for displaying an aerial image by using retro-reflection, and includes a light source disposed being inclined to one side of a reference line, a retroreflective member disposed being inclined to the other side of the reference line, a polarized-beam splitter disposed to face the light source and the retroreflective member, and a transmission film formed on the polarized-beam splitter, wherein the transmission film includes a low transmittance area in an observation range where the aerial image is visible. Particularly, in the low transmittance area the light source is difficult to be seen in an observation range where the aerial image is visible. In particular, making the light source difficult to be seen means that in the transmission film the transmittance of the light source in the viewing direction of a viewpoint of a user is reduced (as compared to other areas of the transmission film) by providing the low transmittance area having a low transmittance in the transmission film.

In some embodiments, the transmission film includes the low transmittance area where the transmittance is low and at least one area where the transmittance is high. In some embodiments, the transmission film includes an area in which the transmittance gradually increases from the low transmittance area. In some embodiments, the low transmittance area is in an observation range in which the aerial image is not clipped, which is within an observation range in which at least a part of the aerial image is visible. In some embodiments, the low transmittance area is determined based on a position where a straight line connecting an end of the aerial image and an end of the light source crosses the transmission film. In some embodiments, the reference line is orthogonal to a main surface of the polarized-beam splitter, an angle between the reference line and an optical axis orthogonal to the main surface of the light source is less than 90 degrees, and an angle between the reference line and the optical axis orthogonal to the main surface of the retroreflective member is less than 90 degrees.
FIG. 1A is a perspective view illustrating an example of an existing aerial image display device;
FIG. 1B is a perspective view illustrating another example of an existing aerial image display device that uses a decorative sheet;
FIG. 2A is a schematic cross-sectional view illustrating each part constituting a display device according to an embodiment of the present disclosure;
FIG. 2B is a view illustrating a relationship between an observation range of an aerial image in the display device of FIG. 2A and a low transmittance area of a transmission film;
FIG. 3 is a perspective view illustrating an example of an external configuration of a display device for an aerial image according to an embodiment of the present disclosure;
FIG. 4A is a diagram illustrating another configurational example of a transmission film according to an embodiment of the present invention, in which the transmittance changes gradually and in a continuous manner;
FIG. 4B is a diagram illustrating still another configurational example of a transmission film, in which the transmittance changes in a stepwise manner; and
FIG. 4C is a diagram illustrating still another configurational example of a transmission film, in which the transmittance changes in a curvilinear manner.

In the AIRR display device, one of the techniques for creating an aerial image or video image is the one that uses a polarized-beam splitter and a retroreflective plate. In this method, an aerial image is formed after the original image of the aerial image is transmitted and reflected by the polarized-beam splitter and the retroreflective plate. Therefore, depending on an angle at which the aerial image is viewed, a viewer can undesirably see the display light source or an LED light source, which is the original image, and the viewer may be confused as to which of the aerial image or the light source should be observed, which causes a sense of incongruity.

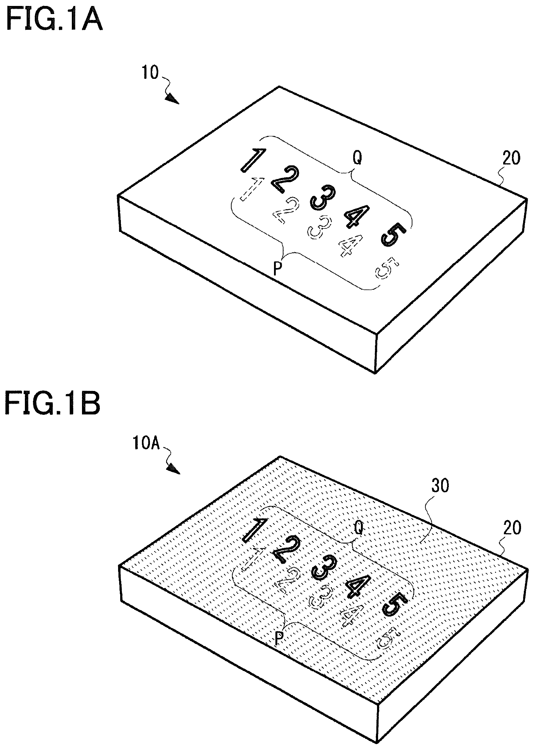

FIG. 1A is a perspective view illustrating an example of an existing aerial image display device. An aerial image display device 10 houses an optical system such as a light source and a retroreflective member, in a casing 20 provided with a polarized-beam splitter on its surface, and displays an aerial image Q (numbers 1, 2, 3, 4, and 5) above the casing 20. However, depending on the angle at which the aerial image Q is viewed, the light source (an original image or video image P) inside the casing 20 is visible.

JP2022-180814A restricts the angle of the display light source such that the viewer cannot see the original video image, but this method has issues such as restricting the inclination of the aerial image and increasing the thickness of the product.

In contrast to this, in an aerial image display device 10A as illustrated in FIG. 1B, a decorative sheet (transmission film) 30 configured for transmitting light at a fixed transmittance is formed on the surface of the casing 20, and the interior of the casing 20 is hidden while reflecting the aerial image Q. However, in this method, when the decorative sheet 30 has a uniform transmittance throughout and the transmittance of the decorative sheet 30 is low, the luminance of the aerial image Q decreases. In contrast to this, when the transmittance of the decorative sheet 30 is increased, decrease in the luminance of the aerial image Q can be suppressed, but there is a trade-off that the concealability of the interior of the casing 20 decreases.

A display device which addresses such existing issues and makes light sources difficult to be seen while maintaining the luminance of an aerial image is provided.

A display device for an aerial image according to the present disclosure uses a transmission film (e.g., decorative sheet) to make an original image (light source) difficult to be viewed in an observation range where an aerial image is visible, while suppressing decrease in the luminance of the aerial image as much as possible without limiting a position and an angle of a light source such as a display and an LED.

Next, an embodiment of the present disclosure will be described in detail with reference to the drawings. It should be noted that the drawings include exaggerated representations to facilitate understanding of the disclosure, and do not represent the actual shape or scale of a product as it is.

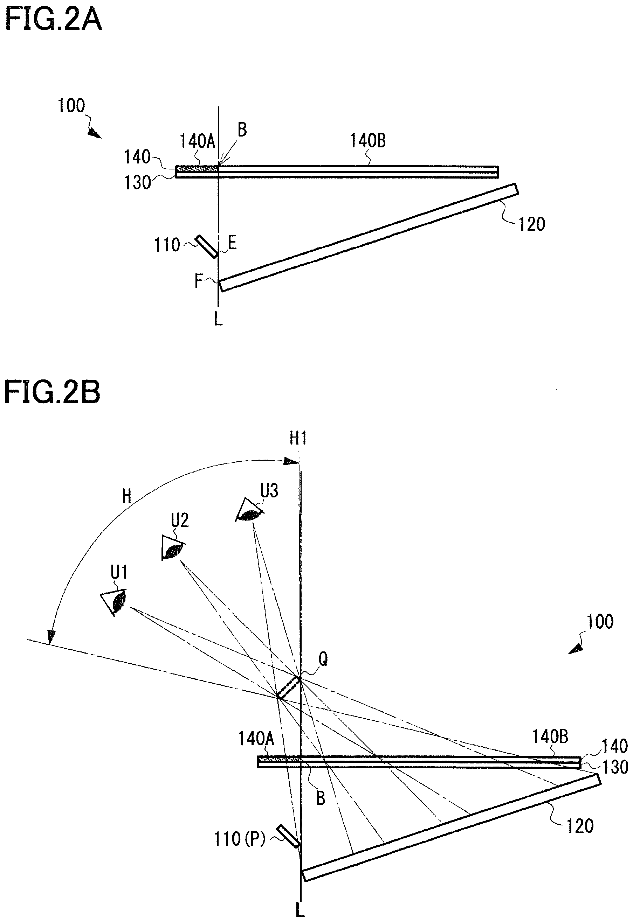

FIG. 2A is a schematic cross-sectional view illustrating each part constituting a display device according to an embodiment of the present disclosure. FIG. 2B is a view illustrating a relationship between an observation range of an aerial image in the display device of FIG. 2A and a low transmittance area of the transmission film.

A display device 100 for an aerial image of the present embodiment includes a light source 110, a retroreflective member 120, a polarized-beam splitter 130, and a transmission film (decorative sheet) 140. Although not illustrated in the drawings, these members may be attached to, for example, a casing, a housing, or the like.

Although not limited, for the light source 110, a display light source such as a liquid crystal display, an organic EL display, a projection-type display, or an LED light source may be used, as long as it has a function of emitting a video image or an image. The display light source includes, for example, a rectangular emission surface and emits a video image in a direction (optical-axis direction) that is normal to the emission surface. The display light source may be, for example, a screen of a mobile terminal such as a smartphone, a screen of a personal computer, or a screen of a projector. The LED light source includes, for example, a plurality of LEDs (light emitting elements) and emits a video image or an image by emitting light from the LEDs.

The light source 110 illustrated herein has a generally rectangular shape and is disposed being inclined at a certain angle with respect to a reference line L orthogonal to the main surface of the polarized-beam splitter 130. One end E of the light source 110 is close to the reference line L and is inclined to face in the direction of the polarized-beam splitter 130.

The retroreflective member 120 is an optical member that reflects light in the same direction as the incident light, and is composed of, for example, a prismatic retroreflective element such as a triangular pyramidal retroreflective element, a full-cube corner retroreflective element, or a bead retroreflective element. For example, when the light emitted from the light source 110 is polarized light, a retardation film (such as a A/4 film) is formed on a surface of the retroreflective member 120.

The retroreflective member 120 is formed of, for example, a sheet or a thin plate having a generally rectangular shape, and one end F of the retroreflective member 120 is inclined at a certain angle to be close to the reference line L below the end E of the light source 110 and to face the direction of the polarized-beam splitter 130. In other words, the light source 110 is disposed on one side of the reference line L, the retroreflective member 120 is disposed on the other side, the angle between the optical axis orthogonal to the main surface of the light source 110 and the reference line L is less than 90 degrees, the angle between the optical axis orthogonal to the main surface of the retroreflective member 120 and the reference line L is less than 90 degrees, and the light source 110 and the retroreflective member 120 are disposed in a generally inverted C shape.

The polarized-beam splitter 130 is an optical member configured to separate incident light into transmitted light and reflected light, and is configured for reflecting light in a specific polarization direction and transmitting light in other polarization directions. The polarized-beam splitter 130 is formed of, for example, a sheet or a thin plate having a generally rectangular shape, is disposed such that its main surface is orthogonal to the reference line L, and is disposed above the light source 110 and the retroreflective member 120 to face each other. The polarized-beam splitter 130 reflects light in a certain polarization direction emitted from the light source 110 toward the retroreflective member 120, for example, and transmits light in a certain polarization direction retroreflected from the retroreflective member 120.

The transmission film 140 has a rectangular shape, for example, and is formed on the polarized-beam splitter 130. The transmission film 140 has the same size as the polarized-beam splitter 130 or a size that covers most of the polarized-beam splitter 130. The characteristic point of the present embodiment is that the transmission film 140 does not have a uniform transmittance throughout, but is configured such that the transmittance of a part of the transmission film 140 is changed such that the light source 110 (original image) is difficult to be seen in an observation range where the aerial image is visible, and decrease in the luminance of the aerial image can be suppressed.

The transmission film 140 as illustrated in FIG. 2A is configured such that the transmittance of an area 140A on the left side of a boundary B near or coincident along the reference line L is low and the transmittance of an area 140B on the right side of the boundary B is high. The transmission film 140 may be formed of a single film or a laminate of a plurality of films. In the transmission film 140, for example, the area 140A having a low transmittance may be formed by pasting an ND filter (neutral density filter) on a polycarbonate (PC) having a uniform transmittance throughout, or may be formed of a single-layer polycarbonate or a single-layer ND filter including an area having a low transmittance and an area having a high transmittance.

The light emitted from the light source 110 is reflected by the polarized-beam splitter 130, and the reflected light is incident on the retroreflective member 120 facing the polarized-beam splitter 130. The retroreflective member 120 reflects the light in the same direction as the incident direction, and the reflected light is transmitted through the polarized-beam splitter 130 and the transmission film 140, and the transmitted light forms an image. Thus, as illustrated in FIG. 2B, an aerial image Q is generated. The aerial image Q is generated at a position symmetrical to the light source 110 (original image P) with respect to the main surface of the polarized-beam splitter 130.

An observation range H in which the aerial image Q can be viewed is limited to an observation range in which the retroreflective member 120 can be viewed through the polarized-beam splitter 130 from the viewpoint of a viewer. A viewpoint U2 illustrates the position of the eye when the aerial image Q is viewed from the front, a viewpoint U1 illustrates the leftmost position of the eye that can view the entire aerial image Q, and a viewpoint U3 illustrates the rightmost position of the eye that can view the entire aerial image Q. When the position of the eye moves further to the left than the viewpoint U1 or further to the right than the viewpoint U3, the retroreflective member 120 cannot be seen completely in the direction of the aerial image Q, and thus, the entire aerial image Q cannot be viewed. That is, the observation range H as illustrated in FIG. 2B indicates the observation range in which at least a part of the aerial image Q can be viewed.

The area 140A in which the transmittance of the transmission film 140 is low is formed in the observation range in which the aerial image Q is not clipped, which is within the observation range H in which at least a part of the aerial image Q can be seen. That is, the range in which the transmittance is reduced is the area to the left of the place (boundary B) where a dash-dot line H1 connecting the right end of the aerial image Q and the right end of the light source 110 crosses the transmission film 140. A range in which the transmittance is increased is the remaining area on the right side of the boundary B.

When the aerial image Q is viewed from the viewpoint U3, the light source 110 (original image P) exists in a viewing direction. Therefore, when the transmittance of the transmission film 140 is high, the light source 110, that is, the original image P, can be seen, and the visibility of the aerial image Q is lowered. Therefore, in the present embodiment, the transmittance of the light source 110 in the viewing direction of the viewpoint U3 is reduced by providing the area 140A having a low transmittance in the transmission film 140, thereby making the light source 110 difficult to be seen and enhancing the visibility of the aerial image Q. However, when the transmittance of the area 140A with a low transmittance is excessively lowered, the luminance of the aerial image Q will also be decreased. Therefore, the transmittance of the area 140A with a low transmittance is set to a level that causes no issue in the visibility of the aerial image Q.

When the aerial image Q is viewed from the viewpoints U1 and U2, since the light source 110 does not exist in the viewing directions and the area 140B with a high transmittance exists in the viewing directions, decrease in the luminance of the aerial image Q is suppressed. Note that when the transmission film 140 includes only the area 140A with a low transmittance (that is, when there is no area 140B with high transmittance), change in the luminance of the aerial image Q becomes remarkably obvious. Therefore, in the present embodiment, the transmission film 140 includes the area 140A where the transmittance is low and the area 140B where the transmittance is high.

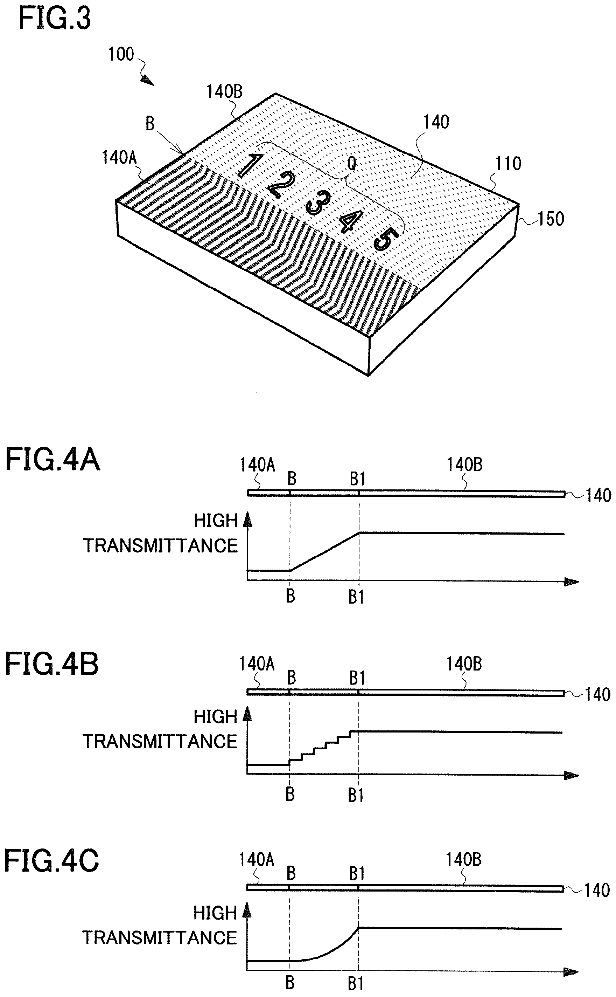

FIG. 3 is a perspective view illustrating an example of an external configuration of a display device 100 for an aerial image of the present embodiment. As illustrated in FIG. 3, a display device 100 includes a casing 150, the light source 110 and the retroreflective member 120 are disposed inside the casing 150, and a laminate of the polarized-beam splitter 130 and the transmission film 140 is mounted on a surface of the casing 150. The transmission film 140 includes the area 140A with a low transmittance and the area 140B with a high transmittance with their boundary being at the boundary B.

In the existing display device 10A as illustrated in FIG. 1B, the light source (original image P) inside the casing 20 is visible depending on the direction in which the user observes, and the aerial image Q becomes difficult to be viewed. However, in the present embodiment, the light source (original image P) inside the casing 150 is made difficult to be seen due to the area 140A having a low transmittance, which accordingly enhances the visibility of the aerial image Q.

In the above embodiment, the transmittance of the transmission film is changed at the boundary B, but when the transmittance changes rapidly, the luminance of the aerial image Q also changes rapidly. Therefore, as illustrated in FIGS. 4A to 4C, the change in the luminance of the aerial image Q may be reduced or alleviated by gradually and continuously changing the transmittance of the transmission film from the boundary B toward a predetermined point B1, by gradually changing it in a stepwise manner, or by gradually changing it in a curvilinear manner.

According to the present disclosure, by forming a transmission film including a low transmittance area in which the light source is difficult to be seen in the observation range where the aerial image is visible on a polarized-beam splitter, the light source can be made difficult to be seen while maintaining the luminance of the aerial image.

Although various embodiments of the present invention have been described in detail above, the present invention is not limited to these embodiments, and various modifications and changes may be made within the scope of the claims.

## Claims

1. A display device configured for displaying an aerial image by using retro-reflection, the display device comprising:
a light source disposed being inclined to one side of a reference line;
a retroreflective member disposed being inclined to another side of the reference line;
a polarized-beam splitter disposed to face the light source and the retroreflective member; and
a transmission film formed on the polarized-beam splitter, wherein
the transmission film includes a low transmittance area, particularly in which the light source is difficult to be seen, in an observation range where the aerial image is visible.

2. The display device according to claim 1, wherein
the transmission film includes an area in which a transmittance gradually increases from the low transmittance area.

3. The display device according to claim 1 or 2, wherein
the low transmittance area is in an observation range in which the aerial image is not clipped, the observation range in which the aerial image is not clipped being within an observation range in which at least a part of the aerial image is visible.

4. The display device according to claim 3, wherein
the low transmittance area is determined based on a position where a straight line connecting an end of the aerial image and an end of the light source crosses the transmission film.

5. The display device according to one of claims 1 to 4, wherein
the reference line is orthogonal to a main surface of the polarized-beam splitter, an angle between the reference line and an optical axis orthogonal to the main surface of the light source is less than 90 degrees, and an angle between the reference line and the optical axis orthogonal to the main surface of the retroreflective member is less than 90 degrees.
